Europäisches Patentamt

(19) European Patent Office

Office européen des brevets

(11) Numéro de publication: **0 198 776**
**B1**

(12) **FASCICULE DE BREVET EUROPEEN**

(45) Date de publication du fascicule du brevet:
**18.01.89**

(21) Numéro de dépôt: **86420096.9**

(22) Date de dépôt: **27.03.86**

(51) Int. Cl.⁴: **D04H 3/04,** D03D 15/00,
B29C 67/18

(54) **Armature textile utilisable pour la réalisation de complexes stratifiés et nouveau type de stratifiés comportant une telle armature.**

(30) Priorité: **04.04.85 FR 8505346**

(43) Date de publication de la demande:
**22.10.86 Bulletin 86/43**

(45) Mention de la délivrance du brevet:
**18.01.89 Bulletin 89/3**

(84) Etats contractants désignés:
**AT BE CH DE GB IT LI LU NL SE**

(56) Documents cités:
**FR-A- 1 167 764**
**FR-A- 2 425 487**
**GB-A- 1 207 065**

(73) Titulaire: **ETABLISSEMENTS LES FILS D'AUGUSTE CHOMARAT & CIE. Société Anonyme, 7, rue Roy, F-75008 Paris(FR)**

(72) Inventeur: **Fourezon, André, Mariac, F-07160 Le Cheylard(FR)**

(74) Mandataire: **Laurent, Michel et al, Cabinet LAURENT et GUERRE B.P. 32, F-69131 Ecully Cédex(FR)**

## Description

L'invention concerne un perfectionnement apporté aux armatures textiles utilisées pour la réalisation de complexes stratifiés, c'est-à-dire des articles à base de résine (polyester ou autres) armée par une nappe textile de renforcement.

De très nombreux types de nappes textiles tels que tissus, grilles, non tissés ou combinaisons de tels éléments ont été proposés à ce jour pour la réalisation des stratifiés.

Dans de très nombreuses applications, afin d'obtenir une bonne pénétration de la matière dans laquelle doit être noyée l'armature, par exemple une bonne pénétration de la résine (polyester ou autre) ou de la mousse (polyuréthane), il est souhaitable que l'armature soit ajourée. De très nombreuses techniques connues dans l'industrie textile peuvent être utilisées pour réaliser de telles armatures ajourées.

Ainsi, il pourrait être envisagé de faire appel au tissage mais il est alors nécessaire, si l'on veut obtenir une strucutre stable, non déformable, d'utiliser une armature de type gaze afin d'obtenir un positionnement parfait des fils de chaîne par rapport aux fils de trame.

Il pourrait être également envisagé de faire appel à la technique du tricotage, technique bien connue pour réaliser des filets. Dans un tel cas, la présence des mailles a pour conséquence d'entraîner un alourdissement de l'article et surtout d'avoir des zones très denses au point de blocage, zones dans lesquelles la résine ou similaire peut avoir des difficultés à pénétrer.

Il a également été proposé des armatures textiles dites "grilles", ces armatures étant composées de nappes de fils superposés, orientées différemment les unes par rapport aux autres et liées entre elles par collage. De tels articles de type grille peuvent donc avoir une structure ajourée et permettent d'obtenir des matériaux renforcés stratifiés dans toutes les directions mais ils présentent cependant l'inconvénient de comporter une grande quantité de liants qui peuvent nuire aux qualités de l'article composite terminé.

De plus, on connait également des feutres ou non tissés ajourés qui présentent l'avantage d'avoir une très bonne perméabilité lors de l'imprégnation avec la matière d'enrobage mais ont cependant comme inconvénient d'avoir de faibles caractéristiques de résistance à la traction.

Par ailleurs, ainsi que cela ressort notamment des FR-A 1 167 764 et FR-A 2 214 000, il a été proposé des armatures textiles dites "nappes unidirectionnelles", c'est-à-dire constituées pour majorité de fibres s'étendant soit transversalement soit longitudinalement et qui sont liées entre elles par collage par des fils s'étendant transversalement par rapport aux fils de renforcement proprement dits (les fils de liage pouvant être soit tissés lâches avec les fils précités soit simplement superposés à ceux-ci). A ce jour, dans de telles nappes unidirectionnelles, les fils de renforcement proprement dits sont en général maintenus sensiblement accolés les uns aux autres par les fils de liage.

Or on a trouvé, et c'est ce qui fait l'objet de la présente invention, un nouveau type d'armature textile ajourée, utilisable pour la réalisation de complexes stratifiés, cette armature pouvant comporter soit une seule série de fils de renforcement (armature unidirectionnelle), soit deux séries de fils de renforcement (armature bidirectionnelle) qui non seulemnt est simple à réaliser, présente de bonnes caractéristiques de perméabilité lors de l'imprégnation, est facilement stockable et manipulable mais surtout présente une contexture parfaitement stabilisée.

D'une manière générale, l'invention concerne donc un nouveau type d'armature textile utilisable pour la réalisation de stratifiés, cette armature étant du type constitué par au moins une nappe de fils de renforcement proprement dits, lesdits fils étant liés entre eux par collage avec des fils de liage, très fins par rapport aux fils de renforcement, et elles se caractérise par le fait que:

– lesdits fils de renforcement se présentent sous la forme de bandes espacées les unes des autres de manière à former des jours de forme définie, stables et indéformables,

– des fils de liage additionnels sont disposés de part et d'autre de chacune des bandes de fils de renforcement.

Comme matière constituant les fils de renforcement, on utilisera tout type de fil employé couramment pour la réalisation d'articles stratifiés, tels que des fils de verre, des fils de carbone, des fils aramide tels que ceux commercialisés sous la marque "KEVLAR", ...

De tels fils se présentent, dans le matériau, sous la forme de bandes planes, constituées d'une multitude de filaments parallèles, la largeur de ces bandes étant adpatée en fonction des articles à réaliser mais comprise en général entre deux et quinze millimètres. L'espacement (donc les dimensions des jours) sera également fonction des articles à réaliser mais, grâce à l'invention, il est possible d'obtenir des jours de très faible dimension, parfaitement stables, par exemple ayant une largeur de un millimètre pour une hauteur de cinq millimètres, ce qui était pratiquement impossible obtenir avec les solutions connues à ce jour.

Comme fils de liage, on utilisera de préférence des fils chimiques, au moins superficiellement thermofusibles et thermocollants, ces fils étant compatibles avec la résine à renforcer. On peut par exemple utiliser un fil à base de copolyamide, de polypropylène, de polyester... dont le point de fusion est inférieur à celui des fils de renforcement proprement dits. De préférence, on utilisera cependant des fils à âme comportant une âme à base d'une matière similaire à ceux des fils de renforcement (par exemple verre, aramides, carbone...) enrobés d'une couche de matière thermofusible telle qu'une couche de polyamide, polyester. En effet, dans un tel cas, les fils de liage présentent les mêmes caractéristiques vis-à-vis des traitements thermiques que les fils de renforcement et par ailleurs, après fusion de la couche superficielle thermocollante, l'âme concourt à renforcer l'article.

Dans le matériau conforme à l'invention, les fils de renforcement peuvent se présenter soit sous la forme d'une nappe unidirectionnelle, c'est-à-dire constitués de bandes parallèles espacées les unes des autres, soit éventuellement sous la forme d'une nappe bidirectionnel le, c'est-à-dire constitués de deux séries de bandes formant un angle entre elles à 90° par exemple. Les fils de liage, qui dans la suite de la description seront désignés par l'expression "fils thermofusibles" sont, dans le cas d'une nappe unidirectionnelle, disposés transversalement par rapport à ladite nappe et peuvent être soit tissés avec les fils de renforcement soit simplement superposés à ceux-ci à la manière d'une grille textile.

Dans le cas d'articles bidirectionnels, c'est-à-dire d'articles constitués de deux séries de fils de renforcement formant un angle entre elles, ces fils peuvent être soit tissés soit simplement superposés à la manière d'une grille textile. Le liage est, dans ce cas, obtenu au moyen de deux séries de fils thermofusibles associés à chaque bande de renforcement et disposés latéralement de part et d'autre de chaque bande.

Enfin, si les bandes de fils de renforcement peuvent être régulièrement espacées les unes des autres (par exemple avoir un espace entre chaque bande), il est également possible, conformément à l'invention, de regrouper ces bandes (par deux, par trois) accolées les unes aux autres, l'espace étant alors réalisé entre chaque groupe de bandes. Tout procédé de tissage ou similaire peut être utilisé pour réaliser le matériau conforme à l'invention. D'une manière générale, pour réaliser un tel matériau, de manière connue, on formera une nappe unidirectionnelle ou bidirectionnelle de fils de renforcement, par tissage ou selon une technique "grille", lesdits fils étant associés à au moins une série de fils thermofusibles disposés, conformément à l'invention, d'une part, transversalement par rapport aux fils de renforcement et, d'autre part, de part et d'autre de chaque bande de fils de renforcement et, après réalisation du complexe et avant renvidage, on soumettra l'article formé à un traitement thermique provoquant la fusion des fils thermofusibles et, par suite, leur collage avec les fils de renforcement.

Un tel matériau en forme de nappe peut être directement incorporé à une résine, à une mousse ou toute autre matière à renforcer. Il présente l'avantage de pouvoir être facilement imprégné du fait des perforations qu'il présente. En outre, les fils de renforcement se présentant de préférence sous la forme de mèches planes constituées de filaments parallèles, l'imprégnation s'en trouvera encore facilitée.

Une telle nappe peut éventuellement être préimprégnée de résine, de mousse, de manière à constituer un complexe intermédiaire rigide ou non.

Dans un tel cas, il est possible soit d'utiliser le matériau intermédiaire ainsi réalisé sous une forme plane, par exemple si on souhaite incorporer un renforcement au coeur d'une mousse, d'une résine soit, éventuellement de lui donner une configuration en forme de relief, tel que par exemple en forme d'omega. Dans ce dernier cas, il est possible de réaliser des articles multicouches comportant une couche interne constituée d'un tel matériau noyé dans une épaisseur de mousse par exemple et, sur les deux faces extérieures, de rapporter des éléments externes, tels que des plaques ou autres surfaces de finition, la liaison entre les deux couches étant favorisée par la présence du renfort conforme à l'invention en surface de la couche intermédiaire.

Le matériau conforme à l'invention est également particulièrement approprié lorsque l'on souhaite réali ser des éléments en forme, par exemple des éléments tubulaires comportant une âme en matière plastique (PVC par exemple), obtenue par extrusion et à la périphérie de laquelle on rapporte un revêtement externe. Dans un tel cas, le matériau selon l'invention permet d'améliorer la liaison entre la couche interne et la couche externe stratifiée étant donné qu'il se produit un accrochage ou pontage mécanique du PVC au travers des orifices et que la résine des couches extérieures s'accroche à la surface du matériau.

L'invention et les avantages qu'elle apporte seront cependant mieux compris grâce aux exemples de réalisation donnés ci-après à titre indicatif et non limitatif et qui sont illustrés par les schémas annexés dans lesquels:

— les figures 1 et 2 sont des vues de dessus et en coupe d'un matériau unidirectionnel réalisé conformément à l'invention et dans lequel les fils de liage sont tissés avec les bandes de renforcement;

— les figures 3 et 4 sont des vues similaires aux figures 1 et 2 d'un matériau obtenu au moyen d'une technique de réalisation de grille non tissée;

— les figures 5, 6 et 7 sont respectivement des vues de dessus et en coupe selon chaîne et trame d'une nappe bidirectionnelle obtenue par tissage et réalisée conformément à l'invention;

— la figure 8 est une vue schématique d'un complexe stratifié comportant comme élément de renforcement un matériau conforme à l'invention;

— la figure 9 illustre une autre forme de réalisation d'un complexe stratifié à partir d'un matériau conforme à l'invention;

— la figure 10 illustre un tube, en perspective éclatée, réalisé à partir d'un élément de renforcement selon l'invention.

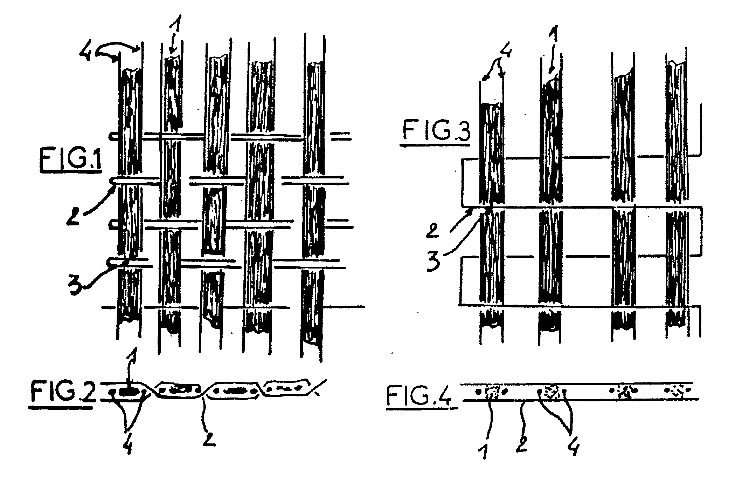

Si l'on se reporte aux schémas annexés, schémas dans lesquels les mêmes références ont été utilisées pour désigner les mêmes éléments, le matériau conforme à l'invention est constitué, dans sa forme la plus simple, d'une nappe de fils de renforcement proprement dits (1) liés entre eux par des fils de liage (2), disposés transversalement par rapport à la nappe (1) et dans une proportion très faible par rapport aux fils de renforcement (1). Les fils de liage (2) peuvent, soit être tissés avec les fils de renforcement (1) (figures 1 et 2), soit, simplement superposés à ces fils, par exemple en réalisant l'article sur un métier à tisser à technique "grille". Conformément à l'invention, les fils de renforcement (1) sont espacés les uns des autres et leur maintien et positionnement est assuré par les fils de liage (2) par collage aux points de croisement (3). Ce collage est obtenu de préférence en utilisant comme fils de liage (2) des fils thermofusibles de tout type connu et de préférence les fils du type "âme/gaine", l'âme étant à base d'un matériau similaire aux fils de renforcement et la gaine à base d'une matière thermofusible thermocollante, telle que polyester, polyamide.

Afin d'améliorer le positionnement et le maintien desdits fils de renforcement (1) et de définir des jours de forme stable, le matériau conforme à l'invention comporte des fils de liage additionnels (4) disposés de part et d'autre de chacune des bandes de fils de renforcement (1). Ces fils de liage additionnels (4) sont de même nature que les fils transversaux (2).

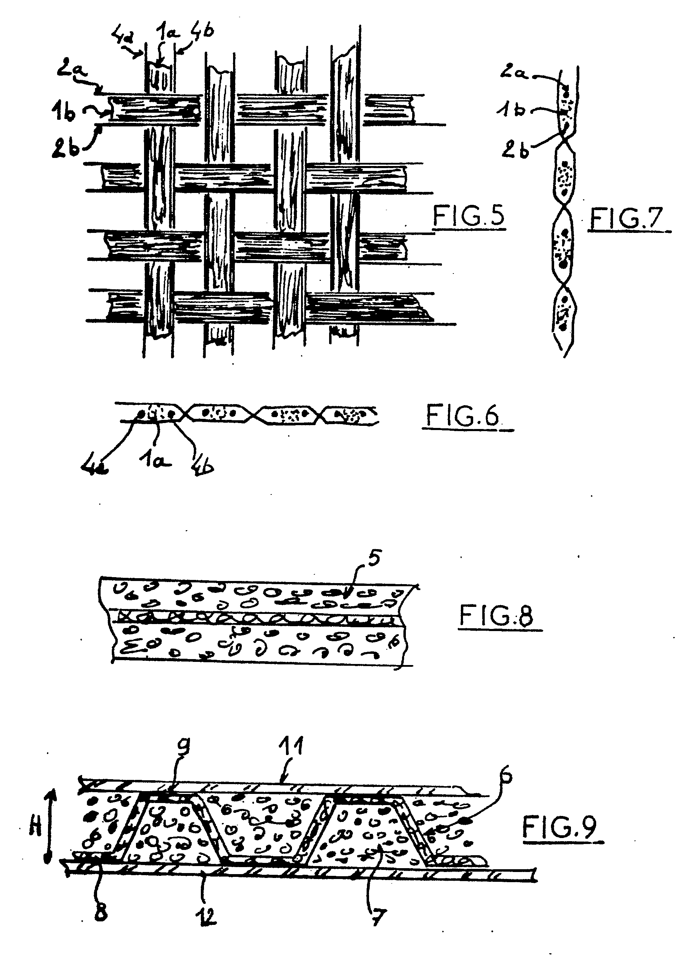

Les figures 5, 6 et 7 illustrent une forme d'un matériau bidirectionnel conforme à l'invention réalisé par tissage. Dans cette forme de réalisation, les fils longitudinaux (1a) et les fils transversaux (1b), de préférence identiques, seront maintenus parfaitement positionnés les uns par rapport aux autres grâce à des fils de liage (2a, 2b), (4a, 4b) disposés latéralement de part et d'autre de chaque bande de fils de renforcement (1).

### Exemple 1:

Sur un métier à tisser conventionnel, on réalise une structure conforme à l'invention du type illustré par la figure 1.

On utilise comme fils de chaîne (1) des fils de verre ayant un titre d'environ 1200 Tex et comme fils de trame de liage (2) des fils thermofusibles à base de fils de verre d'un titre de 70 Dtex gainé de polyamide. Par ailleurs, de part et d'autre de chaque bande de fils de chaîne (1) sont disposés deux fils de liage additionnels (4) similaires aux fils de liage de trame (2).

Chaque bande de fils de chaîne (1) est constitué d'une pluralité de fils élémentaires mis côte à côte permettant d'avoir une mèche d'une largeur totale de huit millimètres. Les bandes successives sont espacées les unes des autres d'une distance de 0,5 millimètre.

Le tissage est réalisé de telle sorte que les fils de trame de liage (2) soient espacés les uns des autres également de huit millimètres.

A la tombée du métier, on obtient une structure tissée dans laquelle les fils longitudinaux (1) sont maintenus emprisonnés par les fils de liage (2). Après tissage, on effectue un traitement thermique à environ 175°C, ce qui provoque la fusion de la gaine en polyamide à la fois des fils de liage transversaux (2) et des fils de liage additionnels (4).

Un tel matériau présente des jours entre les fils longitudinaux et les fils de liage (2) de forme stable, parfaitement définie alors qu'en l'absence des fils de liage additionnels (4), les bandes de fils de chaîne auraient tendance à venir s'accoler les unes aux autres.

Un tel matériau peut être utilisé soit tel quel soit, éventuellement être préimprégné de résine, par exemple de résine epoxy permettant ainsi d'obtenir une structure ajourée utilisable par exemple pour être directement incorporée dans de la mousse de polyuréthane. Lorsque le matériau est ainsi imprégné de résine, il a été constaté qu'après durcissement de la résine, les jours subsistaient entre les bandes de fils de chaîne.

### Exemple 2:

On répète l'exemple 1 si ce n'est qu'au lieu de réaliser la liaison des bandes longitudinales par des fils de liage transversaux (2) tissés, ces fils transversaux (2) sont déposés selon la technique grille.

On obtient également, après traitement thermique et fusion de la gaine des fils thermofusibles de liage un article ajouré dans lequel les jours ont une forme parfaitement définie et sont très stables.

### Exemple 3:

On réalise une armature textile conforme à l'invention du type illustré par les figures 5, 6 et 7, c'est-à-dire une armature bidirectionnelle.

La chaîne de cette armature est constituée comme dans les exemples précédents de fils de verre (1a) regroupés, de manière à obtenir des bandes régulièrement espacées les unes des autres, d'une valeur de 0,5 millimètre, chaque bande ayant une largeur d'environ huit millimètres. De part et d'autre de chaque bande (1a) sont placés, tout comme dans les exemples précédents, des fils de liage thermofusibles (4a, 4b) également à base de fils de verre gainé de polyamide.

La trame est constituée de bandes de fils de verre (1b), similaires aux fils de chaîne (1a). Les bandes (1b) ont également une largeur de cinq millimètres et sont espacés les unes des autres d'une valeur de huit millimètres. De part et d'autre de chaque bande (1b) sont disposés des fils de liage thermofusibles (2a, 2b) également à base de fils de verre gainé de polyamide.

Après tissage et traitement thermique provoquant la fusion de la gaine en polyamide des fils de liage (2a, 2b, 4a, 4b), on obtient une armature ajourée, présentant des jours de 0,5 millimètre de large et huit millimètres de long. Ces jours sont parfaitements stables, indéformables.

Comme dans les exemples précédents, un tel matériau peut être utilisé soit tel quel, soit éventuellement être imprégné d'une résine, résine epoxy qui, après durcissement, permet d'obtenir une plaque rigide, ajourée, utilisable par exemple comme renfort d'une mousse polyuréthane.

Dans tous ces matériaux, on obtient des articles présentant des jours de forme parfaitement définie et stable. Ils peuvent être utilisés soit tels quels dans toute technique de réalisation de stratifiés soit, éventuellement, être préimprégnés d'une certaine quantité de résine afin de réaliser un matériau préimprégné utilisable postérieurement. Par rapport aux structures textiles antérieures, ils présentent de très nombreux avantages par le fait qu'ils peuvent être imprégnés facilement. Ainsi que cela ressort de la figure 8, il est possible d'utiliser un tel matériau, éventuellement constitué de plusieurs couches superposées, noyé à l'intérieur d'une masse de mousse (5). La pénétration de la mousse (5), polyuréthane par exemple, est réalisée parfaitement du fait des jours du matériau et également par le fait que les fils de renforcement (1) sont maintenus pratiquement à plat sans torsion entre les brins unitaires.

Si un tel matériau permet de réaliser des complexes stratifiés simples tels qu'à la figure 8, il peut également être mis en forme préalablement à son incorporation, tel que représenté à la figure 9.

Dans le cas présent, la plaque préimprégnée (6) à base d'un matériau conforme à l'invention est, dans un premier temps, mise sous la forme souhaitée puis noyée dans de la mousse (7). Si la hauteur H de l'ensemble est telle que les faces (8) et (9) respectives du matériau affleurent à la surface de la mousse, il est possible de rapporter, de chaque côté, des plaques ou similaires (11, 12) également à base de stratifiés conventionnels, la liaison entre les différentes couches ainsi formées se trouvant améliorée par le fait que les plaques (11, 12) viennent en contact avec les surfaces textiles du matériau (6).

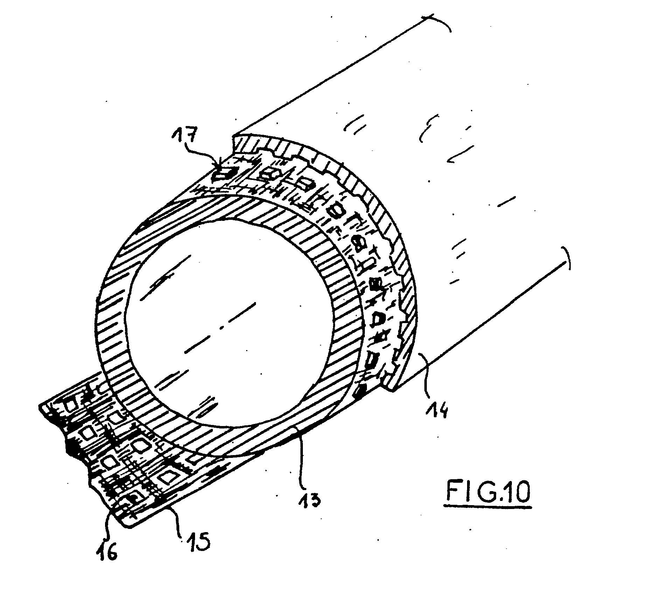

Un tel matériau est également particulièrement approprié pour réaliser des articles en forme, par exemple des tubes tels qu'illustrés à la figure 10. Cette figure 10 illustre schématiquement la réalisation d'un tube à partir d'un tube élémentaire en PVC (13) obtenu par extrusion. Il est bien connu que de tels tubes en PVC (13) présentent une mauvaise résistance mécanique. En général, ces tubes (13) doivent être associés à des couches externes stratifiées rapportées après extrusion. Grâce au matériau conforme à l'invention, la liaison entre la couche interne (13) et les couches externes (14), se trouve nettement améliorée. En effet, lors de la réalisation du complexe, dans un premier temps, on entoure le tube primaire (13) en PVC d'une couche (15) d'un matériau ajouré selon l'invention. Par chauffage, on provoque la liaison de ce matériau (15) avec le tube interne (13), une certaine quantité de matières exudant au travers des perforations (16) et formant des protubérances (17) à l'extérieur. Il est alors possible de rapporter de manière connue des couches périphériques (14), la liaison entre lesdites couches (14) et la partie interne (13, 15) se trouvant améliorée par les protubérances (17) qui forment des points d'ancrage.

Les quelques exemples qui précèdent montrent bien les avantages apportés par l'invention qui, bien entendu, n'est pas limitée à ces modes de réalisation. Ainsi, si le matériau selon l'invention peut être utilisé en une seule couche, comme tout matériau de renfort de stratifiés, il peut être envisagé de superposer plusieurs de ces couches éventuellement en les associant à d'autres nappes fibreuses telles que par exemple une nappe non tissée en verre. De plus, si dans les exemples de réalisation précédents, les fils de renforcement (1) et les fils de liage (2) ont été représentés selon deux directions perpendiculaires, il est évident que lesdits fils de renforcement (1) pourraient être disposés en biais par rapport à la longueur du matériau.

**Revendications**

1. Armature textile utilisable pour la réalisation de complexes stratifiés du type constitué par au moins une nappe de fils de renforcement (1) proprement dits, lesdits fils (1) étant liés entre eux par collage avec des fils de liage (2), disposés transversalement, en faible proportion par rapport auxdits fils de renforcement (1), caractérisée par le fait:
   - que lesdits fils de renforcement (1) se présentent sous la forme de bandes espacées les unes des autres de manière à former des jours de forme définie, stables et indéformables;
   - que des fils de liage additionnels (4) sont disposés de part et d'autre de chacune des bandes de fils de renforcement.

2. Armature selon la revendication 1, caractérisée par le fait que les fils de liage (2) sont soit tissés avec les fils de renforcement (1), soit simplement superposés à cesdits fils.

3. Armature selon la revendication 2, caractérisée par le fait qu'elle comporte deux séries de fils de renforcement (1a, 1b) formant un angle entre elles et définissant des jours de forme définie et stable, les bandes (1a, 1b) étant maintenues positionnées les unes par rapport aux autres au moyen de fils de liage (2a, 2b) (4a, 4b) disposés latéralement de part et d'autre de chaque bande.

4. Armature selon l'une des revendications 2 et 3, caractérisée par le fait qu'elle est pré-imprégnée.

5. Armature selon la revendication 4, caractérisée par le fait qu'elle présente une configuration non plane (forme d'omega par exemple).

6. Article stratifié comportant une armature selon la revendication 5, caractérisé en ce que l'armature est noyée dans la matière à renforcer (mousse par exemple), de telle sorte que les faces (8, 9) de cette armature affleurent à la surface de la matière (7) et soient en contact avec des revêtements extérieurs (11, 12).

7. Article stratifié comportant une armature selon l'une des revendications 1 à 5, caractérisé par le fait qu'il se présente sous la forme d'un tube comportant un tube élémentaire (13) entouré de ladite armature (15) elle-même recouverte d'une couche de finition (14).

**Patentansprüche**

1. Textile Armierung zum Herstellen von Schichtstoffen, die zumindest eine Schicht an eigentlichen Verstärkungsfäden (1) aufweist, wobei die Fäden (1) durch Verkleben mit Bindungsfäden (2) untereinander verbunden sind, die querverlaufend sind und die im Vergleich zu den Verstärkungsfäden (1) geringere Ausmaße aufweisen, dadurch gekennzeichnet,
   - daß die Verstärkungsfäden (1) als Bänder ausgebildet sind, die derart voneinander beabstandet sind, daß stabile und formbeständige Öffnungen bestimmter Form gebildet sind; und
   - daß zusätzliche Bindungsfäden (4) beidseits jedes Bandes der Verstärkungsfaden angeordnet sind.

2. Armierung nach Anspruch 1, dadurch gekennzeichnet, daß die Bindungsfäden (2) entweder mit den Verstärkungsfäden gewoben sind, oder daß sie lediglich auf diesen Fäden aufliegend sind.

3. Armierung nach Anspruch 2, dadurch gekennzeichnet, daß sie zwei Reihen an Verstärkungsfä-

den (1a, 1b) aufweist, die unter einem Winkel zueinander verlaufen und die Öffnungen bestimmter und stabiler Form umgrenzen, wobei die Bänder (1a, 1b) mittels Bindungsfäden (2a, 2b) (4a, 4b) untereinander in Stellung gehalten werden, die seitlich beidseits jedes Bandes angeordnet sind.

4. Armierung nach Anspruch 2 oder 3, dadurch gekennzeichnet, daß sie vorimprägniert ist.

5. Armierung nach Anspruch 4, dadurch gekennzeichnet, daß sie eine nicht-ebene Konfiguration aufweist (beispielsweise die Form eines Omega).

6. Schichtartikel mit einer Armierung nach Anspruch 5, dadurch gekennzeichnet, daß die Armierung in dem zu verstärkenden Material (beispielsweise Schaumstoff) derart eingebettet ist, daß die Stirnseiten (8, 9) der Armierung an der Oberfläche des Materials (7) hervortreten und daß diese in Kontakt mit äußeren Überzugsschichten (11, 12) stehen.

7. Schichtartikel mit einer Armierung nach einem der Ansprüche 1 bis 5, dadurch gekennzeichnet, daß er die Form eines Rohres aufweist, das ein elementares Rohr (13) aufweist, das von der Armierung (15) umrundet ist, wobei diese wiederum von einer Endschicht (14) bedeckt ist.

faces (8, 9) of the said reinforcement are flush with the surface of the matter (7) and come into contact with the outer layers (11, 12).

7. Laminated article containing a reinforcing layer according one of the claims 1 to 5 characterized by the fact that is under a tubular configuration comprising an elementary tube (13) surrounded by said reinforcement (15) which is also surrounded by a finishing layer (14).

**Claims**

1. Textile reinforcement used for making laminated complexes of the type constituted by at least one layer of reinforcing yarns (1) proper, said yarns being bonded together by adhesion with binding yarns (2), disposed transversely, in a small proportion with respect to said reinforcing yarns (1), characterized in that:
   - said reinforcing yarns (1) are in the form of strips spaced apart from one another so as to form stable and undeformable holes of definite shape,
   - additional binding yarns (4) are disposed on either side of each of the strips of reinforcing yarns.

2. Reinforcement according to the claim 1, characterized by the fact that the binding yarns (2) are either woven with the reinforcing yarns (1) or simply superposed on sais yarns.

3. Reinforcement according to the claim 2, characterized by the fact that it comprises two series of reinforcing yarns (1a, 1b) forming an angle between them and defining holes of definite and stable form, the strips (1a, 1b) being maintained positioned with respect to one another by means of binding yarns (2a, 2b) (4a, 4b) disposed laterally on either side of each strip.

4. Reinforcement according one of claims 2 and 3, characterized in that it is previously pre-impregnated.

5. Reinforcement according to the claim 4, characterized by the fact that it has a non flat configuration (for example an omega form).

6. Laminated article containing a reinforcing layer according to the claim 5 characterized in that said reinforcement being embedded in the matter to be reinforced (foam for example) such as the outer

EP 0 198 776 B1

FIG.5

FIG.7

FIG.6.

FIG.8

FIG.9

FIG.10